# EUROPÄISCHE PATENTSCHRIFT

(11) **EP 1 697 108 B1**
(45) Veröffentlichungstag und Bekanntmachung des Hinweises auf die Patenterteilung: **25.02.2009**
(21) Anmeldenummer: 04761977.0
(22) Anmeldetag: 28.10.2004
(51) Int. Cl.: B29C 45/54, B29C 45/50

(54) **SPRITZGUSSANLAGE UND SPRITZGIESSANLAGE MIT EINEM MEHRWELLENEXTRUDER, INSBESONDERE RINGEXTRUDER**
INJECTION MOLDING INSTALLATION AND INJECTION MOLDING INSTALLATION EQUIPPED WITH A MULTIPLE-SCREW EXTRUDER, PARTICULARLY A RING EXTRUDER
PROCEDE DE MOULAGE PAR INJECTION ET INSTALLATION DE MOULAGE PAR INJECTION MUNIE D'UNE EXTRUDEUSE A ARBRES MULTIPLES, NOTAMMENT EXTRUDEUSE ANNULAIRE

(30) Priorität: 08.12.2003 DE 10357578
(43) Veröffentlichungstag der Anmeldung: 06.09.2006
(73) Patentinhaber: Bühler AG, 9240 Uzwil (CH)
(72) Erfinder: CHRISTEL, Andreas, 9524 Zuzwil (CH)
(74) Vertreter: Frommhold, Joachim
(86) Internationale Anmeldenummer: PCT/CH2004/000644
(87) Internationale Veröffentlichungsnummer: WO 2005/053931

(56) Entgegenhaltungen:
- EP-A- 0 727 303
- EP-A- 0 881 054
- WO-A-02/36317
- DE-A1- 2 406 569
- DE-A1- 10 160 810
- DE-B- 1 177 808
- DE-B- 1 215 913
- US-A- 5 968 429
- VORBERG F: "COMPOUNDIEREN MIT ZWOELF WELLEN RINGEXTRUDER ZEIGT VORTEILE GEGENUEBER DER DOPPLESCHNECKE" KUNSTSTOFFE, CARL HANSER VERLAG. MUNCHEN, DE, Bd. 90, Nr. 8, August 2000 (2000-08), Seiten 60-62, XP000963682 ISSN: 0023-5563

## Beschreibung

Die Erfindung bezieht sich auf ein Verfahren und eine Anlage zur schonenden Herstellung von Spritzgussteilen aus thermoplastischen Kunststoffen bei hohen Durchsätzen. Die Erfindung bezieht sich weiter auf ein Verfahren und eine Anlage zur schonenden Herstellung von Spritzgussteilen aus thermoplastischen Kunststoffen bei gleichzeitiger homogener Einarbeitung von Additiven oder Compoundierung von Kunststoffmischungen.

Die Erfindung bezieht sich weiter auf eine Anlage, die es ermöglicht, den kontinuierlich ablaufenden Plastifizierschritt in einem Mehrwellenextruder auf wirtschaftliche Weise mit dem taktweise verlaufenden Spritzgussprozess zu kombinieren.

Im Stand der Technik sind Spritzgussverfahren unter Verwendung von Einwellenextrudem vielfach bekannt. So zum Beispiel in DE 1142229 und DE 4221423. Bei grösser werdenden Durchsätzen werden immer grössere Schneckendurchmesser benötigt, was bei gegebenem Längen zu Durchmesser Verhältnis zu sehr langen Extrudern führt und was vor allem bei temperaturempfindlichen Kunststoffen, ein schonendes Aufschmelzen nicht mehr erlaubt, da das immer geringere Oberfläche/Volumen-Verhältnis durch längere Verweilzeiten und höhere Arbeitstemperaturen ausgeglichen werden muss. Weiter nachteilig ist, dass die Compoundiermöglichkeiten sowie die Entgasungsmöglichkelten mit einem Einwellenextruder begrenzt sind, und dass eine gegebene Schneckenwelle nur optimal für ein Eingangsmaterial ausgelegt ist.

Die oben beschriebenen Nachteile werden durch den Einsatz von Zweiweilenextrudem teilweise behoben, so ist zum Beispiel durch die Unabhängigkeit von Durchsatz und Drehzahl eine Anpassung an mehrere Materialspezifikationen möglich. Auch die Compoundiermöglichkeiten sind verbessert. Solche Anlagen sind bekannt zum Beispiel aus der WO 88/06321, wo ein diskontinuierlich laufender Extruder verwendet wird, oder In der WO 02/02293 sowie in der DE 101 60 810, wo jeweils ein kontinuierlich laufender Zweiwellenextruder verwendet wird.

Auch wurden bisher Mehrwellen-Exruder für diverse Zwecke verwendet.

So beschreibt die EP 0 727 303 die Verwendung eines Mehrwellen-Extruders als Nachkondensationsreaktor für die Schmelzphasen-Polykondensation, wobei das nachkondensierte Kunststoffmaterial anschliessend einem Spritzgussprozess zugeführt wird. Dabei liegen die Verweilzeiten des Kunststoffes im Reaktor aber zwischen ca. 30 min und ca. 60 min.

Die EP 0 881 054 beschreibt ein Verfahren zur Entgasung hydrolyseempfindlicher Polymere. Die aus einem Mehrwellen-Extruder austretende Polymerschmelze kann dabei einer Spritzgussmaschine zugeführt werden.

Die WO 02/36317 beschrelbt ein Verfahren zum Verarbeiten eines Polykondensats in einem Mehrwellen-Extruder bzw. in einem Ringextruder. Dabei wird das Polykondensat in dem Extruder aufgeschmolzen und nach relativ kurzer Verweilzeit von unter 60 Sekunden in der Schmelze granuliert. Das Granulat kann dann einem Spritzgussverfahren zugeführt werden, wobei es aber erneut aufgeschmolzen werden muss.

In dem Artikel "Compoundieren mit zwölf Wellen; Ringextruder zeigt Vorteile gegenüber der Doppelschnecke" von F. Vorberg, In Kunststoffe, Carl Hanser Verlag, München, Band 90, Nr. 8, August 2000, Seiten 60 - 62, werden die Vorzüge eines Ringextruders für Compoundierungs- und Entgasungszwecke beschrieben. Von der Verwendung eines derartigen Ringextruders als reine Aufschmelzmaschine mit kurzer Baulänge und bei hohem Durchsatz mit einem unmittelbar folgenden Spritzgussprozess ist aber keine Rede.

Somit bleiben die oben beschriebenen Nachteile beim Spritzgiessen trotzdem teilweise bestehen, und auch die Notwendigkeit für einen Plastifizierextruder mit weiter verbesserten Compoundiermöglichkeiten und Entgasungsmöglichkeiten sowie kürzeren Verweilzeiten und vor allem kürzerer Baulänge bleibt bestehen.

Der Erfindung liegt die Aufgabe zugrunde, diese Nachteile zu beheben. Insbesondere soll sich der Plastfizierextruder durch eine hohe Durchsatzleistung bei geringer Baulänge, gute Misch- und Entgasungscharakteristik, schonende Behandlung sowie kurze Behandlungszeit auszeichnen.

Diese Aufgabe wird durch das Verfahren gemäss Anspruch 1 sowie durch die Anlage gemäss Anspruch 9 gelöst, wobei ein kontinuierlich laufender Mehrwellenextruder mit auf einer Kranzlinle angeordneten Schneckenwelle verwendet wird.

Weitere Ausführungen ergeben sich aus der unten stehenden Beschreibung.

Als thermoplastische Kunststoffe kommen zum Beispiel Polykondensate, wie zum Beispiel Polyester, Polyamide, Polycabonate sowie ihre Copolymere und Blends oder Polyolefine, wie zum Beispiel Polyethylene, Polypropylene sowie ihre Copolymere und Blends, in Frage. Grundsätzlich können jedoch alle thermoplastischen Kunststoffe verwendet werden, solange ihre rheologischen und thermischen Eigenschaften einen Einsatz in einem Spritzgussverfahren erlauben.

Bei den Polykondensaten handelt es sich zum Beispiel um Polyamide, Polyester oder Polylactide, die durch eine Polykondensstionsreaktion unter Abspaltung eines niedermolekularen Reaktionsproduktes gewonnen werden. Dabei kann die Polykondensation direkt zwischen den Monomeren erfolgen oder über eine Zwischenstufe, die anschliessen durch Transesterifikation umgesetzt wird, wobei die Transesterifikation wiederum unter Abspaltung eines niedermolekularen Reaktionsproduktes oder durch Ringöffnungspolymerisation erfolgen kann.

Bei Polyamid handelt es sich dabei um ein Polymer, das durch Polykondensation aus seinen Monomeren, entweder einer Diamin-Komponente und einer Dikarbonsäure-Komponente oder einem bifunktionellen Monomer mit einer Amin- und einer Karbonsäureendgruppe, gewonnen wird.

Bei Polyester handelt es sich dabei um ein Polymer das durch Polykondensation aus seinen Monomeren, einer Diol-Komponente und einer Dikarbonsäure-Komponente, gewonnen wird. Verschiedene, meist lineare oder zyklische Diol-Komponenten kommen zum Einsatz. Ebenso können verschiedene meist aromatische Dikarbonsäure-Komponenten zum Einsatz kommen. Anstelle der Dikarbonsäure kann auch ihr entsprechender Dimethylester eingesetzt werden. Typische Beispiele der Polyester sind Polyethylenterephthalat (PET), Polybutylenterephthalat (PBT) und Polyethylennaphthalt (PEN) die entweder als Homopolymer oder als Copolymere zum Einsatz kommen.

Die thermoplastischen Kunststoffe können sowohl als Neumaterial wie auch als Rezyklat verwendet werden.

Als thermoplastische Kunststoffe können auch Blends oder Kunststoffmaterialgemische verwendet werden.

Das erfindungsgemäße Verfahren ist auch zum Einarbeiten von Additiven geeignet.
Die Additive können vor dem Aufschmelzen zugegeben werden, entweder zusammen mit dem Polykondensat oder über eine separate Dosier- und Beschickungseinrichtung. Dabei werden die Additive bei der Aufschmelzung durch die Knetelemente gleichzeitig optimal gemischt. Die Additive können auch nach dem Aufschmelzen im Extruder zugegeben werden. Die Zugabe der Additive erfolgt zum Beispiel über eine Seitenbeschickungseinrichtung. Optional sind weitere Knet- oder Mischelemente im Extruder vorzusehen, damit die Additive optimal gemischt werden. In besonderen Fällen können die Additive auch erst nach dem Extruder zugegeben werden.

Als Additive eignen sich zum Beispiel Farbstoffe und Pigmente, UV-Blocker, Verarbeitungshilfsmittel, Stabilisatoren, Schlagzähmodifikatoren, Schäummittel chemischer und physikalischer Art, Füllstoffe wie zum Beispiel Nukleierungsmittel, Barriere- oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen usw.

Die Additive können alleine oder als Bestandteil eines Additivpaketes zugegeben werden. Zur Herstellung des Additivpaketes werden mehrere Additive eingesetzt. Zusätzlich kann ein Trägermaterial verwendet werden, in das sich alle Additive einarbeiten lassen. Das Additivpaket kann sowohl als homogenes Pulver oder Granulat wie auch als einfache Additivmischung vorliegen.

Der thermoplastische Kunststoff wird dem Verfahren in festem Zustand, üblicherweise als Schüttgut wie zum Beispiel als Granulat, Pulver, Agglomerat, Flocken oder Schnitzel zugefügt. Ein Granulat kann dabei zum Beispiel zylinderförmig, kugelförmig oder kugelähnlich vorliegen.

Vor dem Einlass in den Plastifizierextruder kann der thermoplastische Kunststoff getrocknet werden. Die Trocknung kann zumindest teilweise auch innerhalb des Extruders erfolgen.

Ein Mehrwellenextruder besteht zumindest aus einem Antrieb, einem Getriebe und einem Verfahrensteil. Das Getriebe ist üblicherweise in ein Reduziergetriebe, und ein Verteilergetriebe unterteilt, wodurch die einzelnen Schneckenwellen einzeln angetrieben werden können. Als Verfahrensteil wird der Teil des Extruders bezeichnet, in dem das zu verarbeitende Material von den Schneckenwellen bearbeitet respektive gefördert wird.

Die Befüllung erfolgt in einen Einzugsbereich des Verfahrensteils, zum Beispiel über einen oder mehrere Einzugstrichter, über die ein oder mehrere Stoffströme gravimetrisch oder volumetrisch zudosiert werden können. Die Zugabe weiterer Komponenten, wie zum Beispiel Additive oder Gase, zum Beispiel zum Aufschäumen, können auch durch Öffnungen im Schmelzebereich erfolgen. Ebenfalls können Öffnungen zum Entgasen genutzt werden.

Der Verfahrensteil des Mehrwellenextruders weist eine Vielzahl (zumindest drei, üblicherweise zumindest sechs, bevorzugterweise zumindest acht) von auf einer Kranzlinie in einem Gehäuse zueinander achsparallel angeordneter, rotierbarer Bearbeitungswellen (Schneckenwellen) auf, die zumindest in Teilbereichen eine fördernde Wirkung aufweisen, wobei die Bearbeitungselemente benachbarter Wellen zumindest teilweise dichtkämmend ineinandergreifend angeordnet sind.

Das Gehäuse weist zumindest eine Materialzufuhröffnung und wenigstens eine Materialaustrittsöffnung auf, sowie Einbuchtungen an den Prozessraum-Innenwänden beiderseits der Schneckenwellen, die zueinander und zu den Schneckenwellen parallel verlaufen, in denen die Schneckenwellen aufgenommen und geführt sind, wodurch ein erster Teilprozessraum und ein zweiter Teilprozessraum bestimmt werden, die auf der einen Seite bzw. der anderen Seite der durch die zueinander parallel verlaufenden Schneckenwellen gebildeten Barriere liegen.

In einer besonderen Ausführung ist der Mehrwellenextruder ein Ringextruder, bei dem zumindest sechs, insbesondere zwölf Schneckenwellen geschlossen kranzförmig oder ringförmig angeordnet sind, wobei sich im Inneren des Wellenkranzes ein Kern befindet. Ein solcher Extruder sind zum Beispiel in DE 196 22 582 beschrieben. Weitere Ausführungen befinden sich auch in DE 102 11 673 und in DE10211673.

Die Erfindung ermöglicht hohe Durchsatzleistungen:
➢ Durchsätze bis zu 800kg/h können erreicht werden mit einer Verfahrensteillänge des Plastifizierextruders von weniger als 1000mm, insbesondere weniger als 650mm.
➢ Durchsätze bis zu 1500kg/h können erreicht werden mit einer Verfahrensteillänge des Plastifizierextruders von weniger als 1250mm, insbesondere weniger als 820mm.
➢ Durchsätze bis zu 2500kg/h können erreicht werden mit einer Verfahrensteillänge des Plastifizierextruders von weniger als 1500mm, insbesondere weniger als 1000mm.

In einem allgemein gültigen Zusammenhang kann eine Durchsatzzahl Z als Funktion der Verfahrensteillänge L und des Durchsatzes Q folgendermassen ausgedrückt werden :
Z = Q / L^{^2.8} , wobei Q in [kg/h] und L in [m] eingesetzt wird.
Z ist erfindungsgemäss grösser als 800 insbesondere grösser als 2750.

Die Verweilzeit im Prozess soll zur schonenden Behandlung des Kunststoffes so gering als möglich sein. Während die Verweilzeit in den Pufferbehältern durch die Zykluszeit gegeben ist, kann die Verweilzeit im Plastifizierextruder und in den Schmelzeleitungen optimiert werden. Die mittlere Verweilzeit des plastifizierten Kunststoffes im Prozess, vom Moment des Aufschmelzens bis zum Einspritzen in das Spritzgussformwerkzeug, soll nicht mehr als 60 Sekunden plus die Zykluszeit, insbesondere nicht mehr als 30 Sekunden plus die Zykluszeit betragen. Die mittlere Verweilzeit des plastifizierten Kunststoffes im Verfahrensteil des Plastifizierextruders, vom Moment des Aufschmelzens bis zum Verlassen des Verfahrensteiles, soll nicht mehr als 15 Sekunden, insbesondere nicht mehr als 10 Sekunden betragen.

Im Anschluss an den Verfahrensteil können Komponenten zum Druckaufbau, wie zum Beispiel eine Schmelzepumpe, ein Schmelzefilter, Vorrichtungen zur Messung rheologischer Eigenschaften, Schaltventile und/oder Pufferbehälter angeordnet sein.

Über eine Schmelzeleitung wird der plastifizierte Kunststoff in ein Spritzgussformwerkzeug gepresst. Spritzgussformwerkzeuge sind im Stand der Technik hinlänglich bekannt. Die eingepresste Kunststoffschmelze wird über Verteilerkanäle auf eine oder mehrere Kavitäten verteilt und verfestigt sich in der gewünschten Form.

Bevorzugterweise wird der plastifizierte Kunststoff zuerst in zumindest einen Pufferbehälter und von da aus in das Spritzgussformwerkzeug gepresst. Über ein Schaltventil kann das Zurückfliessen des plastifizierten Kunststoffes in den Extruder verhindert werden.

Der Pufferbehälter ist so ausgebildet, dass sich sein Volumen zur Aufnahme des plastifizierten Kunststoffes erhöht und zum Ausstoss des plastifizierten Kunststoffes wieder verkleinert, was zum Beispiel durch einen beweglichen Kolben erreicht werden kann. Üblicherweise erfolgt das Ausstossen rascher als das Befüllen des Puffers.

Um den kontinuierlichen Betrieb des Plastifizierextruders zu gewährleisten, während der plastifizierte Kunststoff taktweise in das Spritzgussformwerkzeug gepresst wird, sind in einer besonderen Ausführung die Schneckenwellen axial verschiebbar gelagert, wodurch bei einer axialen Verschiebung nach hinten ein Pufferraum im Verfahrensteil entsteht. Dies wird erreicht, indem entweder:
a) die Schneckenwellen in Bezug auf das Verteilergetriebe axial verschiebbar sind,
b) die Schneckenwellen zusammen mit dem Verteilergetriebe im Bezug auf das Reduziergetriebe axial verschiebbar sind,
c) die Schneckenwellen zusammen mit dem Verteilergetriebe und dem Reduziergetriebe im Bezug auf den Antrieb axial verschiebbar sind,
d) die Schneckenwellen zusammen mit dem Verteilergetriebe, dem Reduziergetriebe und dem Antrieb axial verschiebbar sind,
e) das Gehäuse des Verfahrensteils in Bezug auf die Schneckenwellen axial verschiebbar ist,
f) der Kern im Innern des Schneckenwellenkranzes eines Ringextruders in Bezug auf die Schneckenwellen axial verschiebbar ist.

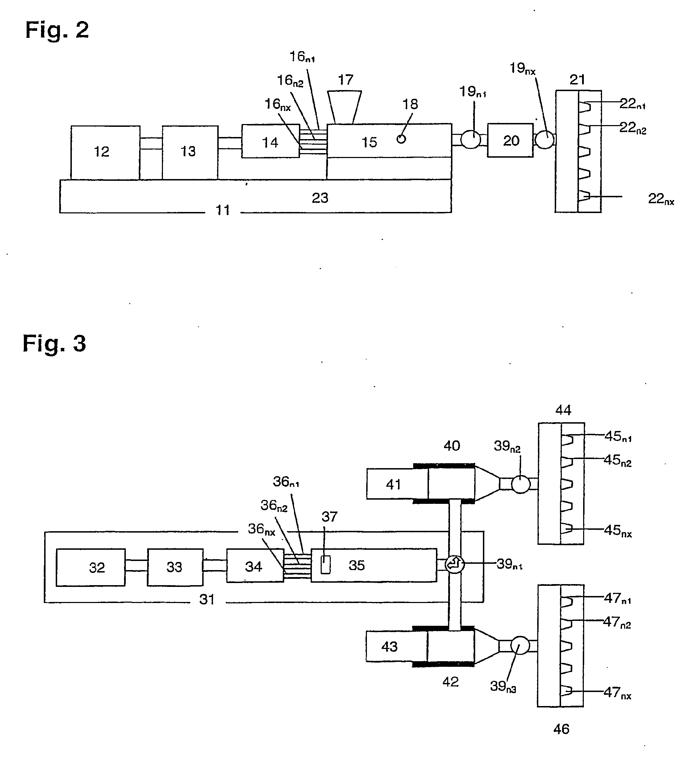

Figur 2 zeigt die Variante b), wo die axiale Verschiebung im Reduziergetriebe, das fest mit dem Untergestell verbunden ist, aufgenommen wird.

Der kontinuierliche Betrieb kann auch durch einen zweiten Pufferbehälter, der zwischen dem Plastifizierextruder und dem ersten Pufferbehälter angeordnet ist, gewährleistet werden.

Eine weitere Möglichkeit bestehen darin, einen nachgeschalteten Tandemextruder mit einer axial verschiebbaren Schneckenwelle zu verwenden.

Ebenfalls denkbar ist es, die in DE10211673 beschriebene Zentrumswelle axial verschiebbar zu gestalten.

Eine weitere Ausführung der Erfindung sieht vor, dass die Anlage zumindest ein Schaltventil und zumindest zwei Pufferbehälter aufweist, wobei der plastifizierte Kunststoff durch das Schaltventil abwechslungsweise in die Pufferbehälter gepresst wird und entweder:
a) von jeweils einem Pufferbehälter in ein zugeordnetes Spritzgussformwerkzeug gepresst wird oder
b) von den zumindest zwei Pufferbehältern über ein weiteres Schaltventil in ein einziges Spritzgussformwerkzeug gepresst wird.

Figur 3 zeigt die Variante a), wo zwei separate Spritzgussformwerkzeuge verwendet werden.

Soll ein Spritzgussteil aus mehreren Materialschichten hergestellt werden so können mehrere Plastifizierextruder verwendet werden, wobei zumindest derjenige mit der höheren Durchsatzleistung den erfindungsgemässen Anforderung entsprechen soll. Das Erzeugen der mehreren Materialschichten kann dabei gleichzeitig oder hintereinander erfolgen.

Eine Ausführung des Verfahrens sieht die Herstellung von Vorformlingen für Hohlkörper insbesondere Getränkeflaschen vor. Dabei wird zum Beispiel ein Polyethylenterephthalat oder eines seiner Copolymere zunächst vorgetrocknet und dann in einem Ringextruder aufgeschmolzen und anschliessend in eine Vielzahl an Kavitäten zumindest eines Spritzgussformwerkzeuges gepresst. Die Trocknung kann auch innerhalb des Extruders durch Entgasen sowohl vor als auch nach dem Aufschmelzen erfolgen, wodurch sich deutliche Energieeinsparungen gegenüber heute üblichen Verfahren erzielen lassen.

Das erfindungsgemässe Verfahren kann mittels eines gleichsinnig drehenden, Mehrwellenextruders durchgeführt werden, dessen Verfahrensraum eine Mantelfläche Am und ein freies Volumen Vf hat, wobei die Schneckenelemente am Schneckensteg einen Aussendurchmesser Da und am Schneckengrund einen Innendurchmesser Di haben, und wobei mindestens ein Teil der Verfahrenszone ein Verhältnis Am³/Vf² ≥ 1020 für zweigängige Schneckenelemente und ein Am³/Vf² ≥ 2000 für dreigängige Schneckenelemente bei einem Verhältnis Da/Di = 1,3 bis 1,7 aufweist.

Das erfindungsgemässe Verfahren kann auch mittels eines gleichsinnig drehenden, Mehrwellenextruders durchgeführt werden, dessen Verfahrensraum eine Zwickelfläche Az und ein freies Volumen Vf hat, wobei die Schneckenelemente am Schneckensteg einen Aussendurchmesser Da und am Schneckengrund einen Innendurchmesser Di haben, und wobei mindestens ein Teil der Verfahrenszone ein Verhältnis Az³/Vf² ≥ 5x10⁻¹ für zweigängige Schneckenelemente und ein Verhältnis Az³/Vf² ≥ 2x10⁻² bei dreigängigen Schneckenelementen bei einem Verhältnis von Da/Di = 1,3 bis 1,7 aufweist.

Vorzugsweise wird dabei in den Extruder eine Drehmomentdichte (Drehmoment pro Schnecke / Achsabstand³) von mindestens 7 Nm/cm³ und insbesondere von mindestens 9 Nm/cm³ eingeleitet.

Besonders vorteilhaft ist es, wenn dabei für das Verhältnis Da/Di = 1,5 bis 1,63 gilt und wenn das Verhältnis bei zweigängigen Schneckenelementen Am³/Vf² ≥ 1500 und bei dreigängigen Am³/Vf² ≥ 3000 ist.

Weitere Vorteile, Merkmale und Anwendungsmöglichkeiten der Erfindung ergeben sich aus der nun folgenden Beschreibung erfindungsgemässer Ausführungen anhand der Zeichnung, wobei:
- Fig. 1: ist eine Schnittansicht eines Ringextruders des Stands der Technik entlang einer Schnittebene senkrecht zur Förder- bzw. Längsrichtung des Extruders ist;
- Fig. 2: eine Seitenansicht einer ersten Ausführungsform der erfindungsgemässen Anlage ist;
- Fig. 3: eine Draufsicht einer zweiten Ausführungsform der erfindungsgemässen Anlage ist.

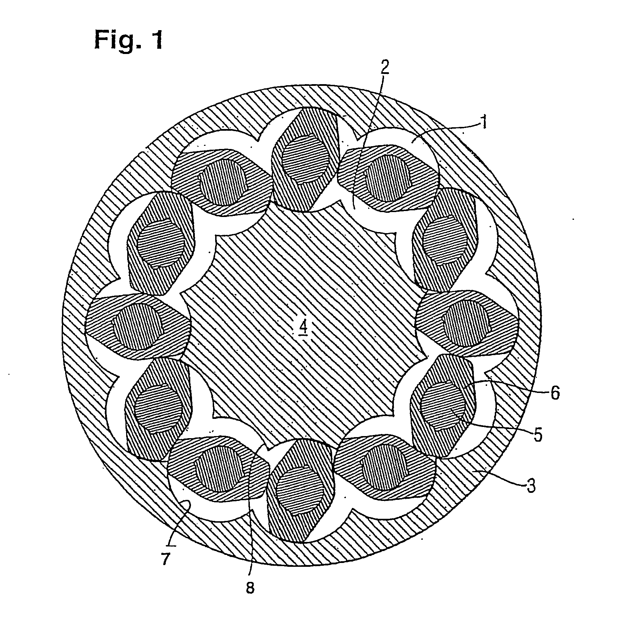

Fig. 1 ist eine Schnittansicht eines Ringextruders des Stands der Technik entlang einer Schnittebene senkrecht zur Förder- bzw. Längsrichtung des Extruders. Der Ringextruder besteht in diesem Fall aus zwölf parallel zur Längs- bzw. Förderrichtung des Extruders, geschlossen kranzartig angeordneten Schneckenwellen, bestehend aus Tragwellen 5 und Bearbeitungselementen 6, die zumindest in Teilbereichen eine fördernde Wirkung aufweisen. Die zwölf geschlossen kranzartig angeordneten Schneckenwellen 5, 6 sind so angeordnet, dass die Bearbeitungselemente 6 benachbarter Wellen zumindest teilweise dichtkämmend ineinander greifen, und dass der äussere Prozessraum 1 des Ringextruders von dem inneren Prozessraum 2 des Ringextruders zumindest in Teilbereichen getrennt ist. Die kranzartig angeordneten Wellen 5 sind zwischen einem Gehäuse 3 und einem zu dem Gehäuse feststehenden Kern 4 gelagert. Die dem Wellenkranz zugewandte Fläche des Gehäuses 3 erscheint in der Querschnittsansicht als sogenannte äussere Blume 7. Die dem Wellenkranz zugewandte Fläche des Kerns 4 erscheint im Querschnitt als eine sogenannte innere Blume 8.

Fig. 2 zeigt von der Seite einen Mehrwellenextruder 11 mit einem Antrieb 12, einem Reduziergetriebe 13, einem Verteilergetriebe 14 und einem Verfahrensteil 15. Über das Getriebe werden die einzelnen Schneckenwellen 16ₙ₁ bis 16ₙₓ einzeln angetrieben. Die Befüllung erfolgt über einen Einzugstrichter 17. Weiterer Komponenten können durch Öffnungen im Schmelzebereich 18 zugegeben werden.

Im Anschluss an den Verfahrensteil sind zwei Schaltventile 19ₙ₁ bis 19ₙ₂ und ein Pufferbehälter 20 angeordnet, wobei über die Schaltventile der Kunststoffstrom während des Befüllens und Entleerens des Pufferbehälters geregelt wird. Über eine Schmelzeleitung wird der plastifizierte Kunststoff in ein Spritzgussformwerkzeug 21 gepresst und über Verteilerkanäle auf mehrere Kavitäten 22ₙ₁ bis 22ₙₓ verteilt. Spritzgussformwerkzeuge sind im Stand der Technik hinlänglich bekannt. Die eingepresste Kunststoffschmelze wird abgekühlt und verfestigt sich in der gewünschten Form.

Bei geschlossenem Schaltventil 19ₙ₁ muss innerhalb des Extruders ein Pufferraum erzeugt werden, in dem sich die Schneckenwellen nach hinten bewegen. Dazu ist das Verteilergetriebe mit den Schneckenwellen fest verbunden und bewegt sich gegenüber dem Reduziergetriebe, das mit dem Untergestell 23 fest verbunden ist.

Fig. 3 zeigt von oben einen Mehrwellenextruder 31 mit einem Antrieb 32, einem Reduziergetriebe 33, einem Verteilergetriebe 34 und einem Verfahrensteil 35. Über das Getriebe werden die einzelnen Schneckenwellen 36ₙ₁ bis 36ₙₓ einzeln angetrieben. Die Befüllung erfolgt über einen Einzugstrichter 37.

Im Anschluss an den Verfahrensteil ist ein Schaltventile 39ₙ₁ angeordnet, mit dem der plastifizierte Kunststoff abwechslungsweise auf einen der zwei Pufferbehälter 40, 42 gelenkt werden kann. Als Bestandteil jedes Pufferbehälters ist jeweils ein Kolben 41, 43 gezeigt, mit dem das Volumen des Pufferbehälters vergrössert und verkleinert werden kann. Über die Schaltventile 39ₙ₂, 39ₙ₃ kann der Kunststoffstrom während des Befüllens und Entleerens des Pufferbehälters 40, 42 geregelt werden. Über eine Schmelzeleitung wird der plastifizierte Kunststoff in das jeweils zugehörige Spritzgussformwerkzeug 44, 46 gepresst und über Verteilerkanäle auf mehrere Kavitäten 45ₙ₁ bis 45ₙₓ resp. 47ₙ₁ bis 47ₙₓ verteilt.

### Bezugszeichen

- 1: äusserer Prozessraum
- 2: innerer Prozessraum
- 3: Gehäuse
- 4: Kern
- 5: Tragwellen
- 6: Bearbeitungselemente
- 7: äussere Blume
- 8: innere Blume
- 11: Mehrwellenextruder
- 12: Antrieb
- 13: Reduziergetriebe
- 14: Verteilergetriebe
- 15: Verfahrensteil
- 16ₙ₁-16ₙₓ: Schneckenwellen
- 17: Einzugstrichter
- 18: Schmelzebereich
- 19ₙ₁-19ₙ₂: Schaltventile
- 20: Pufferbehälter
- 21: Spritzgussformwerkzeug
- 22ₙ₁-22ₙₓ: Kavitäten
- 23: Untergestell
- 31: Mehrwellenextruder
- 32: Antrieb
- 33: Reduziergetriebe
- 34: Verteilergetriebe
- 35: Verfahrensteil
- 36ₙ₁-36ₙₓ: Schneckenwellen
- 37: Einzugstrichter
- 39ₙ₁-39ₙ₃: Schaltventile
- 40: Pufferbehälter
- 41: Kolben
- 42: Pufferbehälter
- 43: Kolben
- 44: Spritzgussformwerkzeug
- 45ₙ₁-45ₙₓ: Kavitäten
- 46: Spritzgussformwerkzeug
- 47ₙ₁-47ₙₓ: Kavitäten

## Patentansprüche

1. Verfahren zur Herstellung von Spritzgussartikeln aus thermoplastischen Kunststoffen, welches aufweist:
a) einen Schritt zum Plastifizieren des Kunststoffes mittels eines Mehrwellenextruders,
b) einen Schritt zum Pressen des plastifizierten Kunststoffes in zumindest eine Form,
**dadurch gekennzeichnet, dass** der Kunststoff in einem kontinuierlich laufenden Mehrwellenextruder mit zumindest drei zumindest in Teilbereichen dichtkämmenden, auf einer Kranzlinie angeordneten Schneckenwellen, insbesondere einem Ringextruder mit zumindest sechs zumindest in Teilbereichen dichtkämmenden, kranzförmig angeordneten Schneckenwellen plastifiziert wird, und dass der Plastifizierextruder (11; 31) eine Durchsatzkennzahl Z von grösser als 800 insbesondere grösser als 2750 aufweist, wobei Z = Q / L^{^2.8} , mit dem Durchsatz Q in [kg/h] und der Länge L in [m] berechnet wird.

2. Verfahren gemäss Anspruch 1, **dadurch gekennzeichnet, dass** es sich bei dem thermoplastischen Kunststoff um ein Polykondensat, insbesondere um ein Polyester handelt.

3. Verfahren gemäss einem der vorhergehenden Ansprüche, **dadurch gekennzeichnet, dass** das Polykondensat vor dem Plastifizieren getrocknet wird.

4. Verfahren gemäss einem der vorhergehenden Ansprüche, **dadurch gekennzeichnet, dass** die Menge an plastifizierten Kunststoff mehr als 800kg/h, insbesondere mehr als 1000kg/h beträgt.

5. Verfahren gemäss einem der vorhergehenden Ansprüche, **dadurch gekennzeichnet, dass** der plastifizierte Kunststoff einen oder mehrere der folgenden Schritte durchläuft:
a) Entgasen,
b) Vermischen mit Additiven,
c) Filtrieren,
d) Erhöhen des Druckes mittels einer Schmelzepumpe,
e) Bestimmen der rheologischen Eigenschaften,
f) Puffern in zumindest einem Pufferbehälter, wodurch das Plastifizleren kontinuierlicher erfolgen kann und das Pressen in eine Form diskontinuierlich erfolgen kann.

6. Verfahren gemäss einem der vorhergehenden Ansprüche, **dadurch gekennzeichnet, dass** der plastifizierte Kunststoff, insbesondere über ein Schaltventil, abwechseind einem von zumindest zwei Pufferbehältern zugeführt wird und entweder:
a) in ein Spritzgussformwerkzeug gepresst wird, das dem jeweiligen Pufferbehälter zugeordnet ist oder
b) über ein weiteres Schaltventil in ein einziges Spritzgussformwerkzeug gepresst wird.

7. Verfahren gemäss einem der vorhergehenden Ansprüche, **dadurch gekennzeichnet, dass** die mittlere Verweilzelt des plastifizierten Kunststoffes im Prozess nicht mehr als 60 Sekunden plus die Zykluszeit, insbesondere nicht mehr als 30 Sekunden plus die Zykluszeit betragen soll und/oder die mittiere Verweilzeit des plastifizierten Kunststoffes im Verfahrensteil des Plastifizierextruders nicht mehr als 15 Sekunden, insbesondere nicht mehr als 10 Sekunden betragen soll.

8. Verfahren gemäss einem der vorhergehenden Ansprüche, **dadurch gekennzeichnet, dass** zur Herstellung einer Vielzahl von Hohlkörpern, insbesondere Vorformlingen von Lebensmittelverpackungen wie Getränkeflaschen, aus einem thermoplastischen Kunststoff, wie zum Beispiel einem Polyester, der plastifizierte Kunststoff in eine Vielzahl von Kavitäten eines Sprltzgussformwerkzeuges gepresst wird.

9. Anlage zur Herstellung von Spritzgussartikeln aus thermoplastischen Kunststoffen, weiche zumindest einen Mehrwellenextruder als Plastifizierextruder (11; 31) und zumindest ein Spritzformwerkzeug (21; 44, 46) aufweist, **dadurch gekennzeichnet, dass** es sich bei dem Plastifizierextruder um einen kontinuierlich laufenden Mehrwellenextruder mit zumindest drei, zumindest in Teilbereichen dichtkämmenden, auf einer Kranzlinie angeordneten Schneckenwellen (16ₙ₁-16ₙₓ; 36ₙ₁-36ₙₓ) handelt, und dass der Plastifizierextruder (11; 31) eine Durchsatzkennzahl Z von grösser als 800 insbesondere grösser als 2750 aufweist, wobei
Z = Q / L^{^2.8}, mit dem Durchsatz Q In [kg/h] und der Länge L in [m] berechnet wird,

10. Anlage gemäss Anspruch 9, **dadurch gekennzeichnet, dass** es sich bei dem Mehrwellenextruder (11; 31) um einen Ringextruder mit geschlossen kranzförmig angeordneten Schneckenwellen handelt.

11. Anlage gemäss Anspruch 9 oder 10, **dadurch gekennzeichnet, dass** der Plastifizierextruder (11; 31) zumindest einen Antrieb (12), ein Reduziergetriebe (13), ein Verteilergetriebe (14) und einen Verfahrensteil (15) aufweist, wobei der Verfahrenstell eine oder mehrere der folgenden Komponenten aufweist;
a) eine oder mehrere Materialzuführöffnungen,
b) eine oder mehrere Doslervorrichtungen, die mit einer Materialzufuhröffnung verbunden ist,
c) eine oder mehrere Austrittssöffnungen,
d) eine oder mehrere Vakuumstationen, die mit einer Austrittsöffnung verbunden sind,
und zwischen dem Plastifizierextruder (11; 31) und dem zumindest einen Spritzgussformwerkzeug (21; 44, 46) eine Schmelzestrecke angeordnet ist, wobei die Schmelzestrecke eine oder mehrere der folgenden Komponenten aufweisen kann:
e) eine Schmeizepumpe,
f) eine oder mehrere Messvorrichtungen zur Bestimmung rheologischer Daten,
g) einen oder mehrere Schmeizefilter,
h) einen oder mehrere Pufferbehälter,
i) ein oder mehrere Schaltventile,

12. Anlage gemäss einem der Ansprüche 9 bis 11, **dadurch gekennzeichnet, dass** die Schmeizestrecke zumindest ein Schaltventil (39ₙ₁) und zumindest zwei Pufferbehälter (40, 42) aufweist, wobei durch das Schaltventil jeweils eine Verbindung zwischen dem Plastifizierextruder (31) und einem Pufferbehälter (40,42) besteht und entweder:
a) Jeweils ein Pufferbehälter mit einem zugeordneten Spritzgussformwerkzeug (44, 46) verbunden ist oder
b) die zumindest zwei Pufferbehälter über ein weiteres Schaltventil mit einem einzigen Spritzgussformwerkzeug verbunden sind.

13. Anlage gemäss einem der Ansprüche 9 bis 12, **dadurch gekennzeichnet, dass** die Schneckenwellen (16ₙ₁-16ₙₓ; 36ₙ₁-36ₙₓ) axial verschiebbar gelagert sind, wodurch bei einer axialen Verschiebung nach hinten ein Pufferraum im Verfahrenstell entsteht, wobei sich entweder:
a) die Schneckenwellen in Bezug auf das Verteilergetriebe (14) axial verschieben; oder
b) die Schneckenwellen zusammen mit dem Vortellergetriebe (14) in Bezug auf das Reduziergetriebe (13) axial verschieben; oder
c) die Schneckenwellen zusammen mit dem Vertellergetriebe (14) und dem Reduziergetriebe (13) in Bezug auf den Antrieb (12) axial verschieben; oder
d) die Schneckenwellen zusammen mit dem Verteilergetriebe (14), dem Reduziergetriebe (13) und dem Antrieb (12) axial verschieben; oder
e) das Gehäuse des Verfahrensteils in Bezug auf die Schneckenwellen axial verschiebt; oder
f) der Kern im Innern des Schneckenwellenkranzes eines Ringextruders in Bezug auf die Schneckenwellen axial verschieben lässt.

14. Anlage gemäss einem der Ansprüche 9 bis 13, **dadurch gekennzeichnet, dass** das Spritzgussformwerkzeug (21; 44, 46) mehrere Kavitäten (22ₙ₁-22ₙₓ; 45ₙ₁-45ₙₓ, 47ₙ₁-47ₙₓ) zur Herstellung von Vorformlinen von Lebensmittelverpackungen insbesondere Getränkeflaschen aufweist.

## Claims

1. A method for manufacturing injection-molded articles out of thermoplastics, which exhibits
a) a step for plasticizing the plastic by means of a multi-screw extruder,
b) a step for pressing the plasticized plastic in at least one mold,
**characterized in that** the plastic is plasticized in a continuously operating multi-screw extruder with at least three screw shanks that tightly intermesh at least in partial areas, and are arranged on a ring line, in particular a ring extruder with at least six screw shanks that are arranged in a ring and tightly intermesh at least in partial areas, and that the plasticizing extruder (11; 31) exhibits a throughput number Z of greater than 800, in particular greater than 2750, wherein Z = Q/L^{^2.8}, with the throughput Q being calculated in [kg/h], and length L in [m].

2. The method according to claim 1, **characterized in that** the thermoplastic material is a polycondensate, in particular a polyester.

3. The method according to one of the preceding claims, **characterized in that** the polycondensate is dried before plasticizing.

4. The method according to one of the preceding claims, **characterized in that** the quantity of plasticized plastic exceeds 800 kg/h, in particular exceeds 1000 kg/h.

5. The method according to one of the preceding claims, **characterized in that** the plasticized plastic passes through one or more of the following steps:
a) degassing,
b) mixing with additives;
c) filtering,
d) increasing of pressure with a melt pump,
e) determining of rheological properties,
f) buffering in at least one buffer container, allowing plasticization to take place more continuously, and pressing in a mold to take place discontinuously.

6. The method according to one of the preceding claims, **characterized in that** the plasticized plastic is alternately supplied to one or at least two buffer containers, in particular by way of a control valve, and either:
a) Pressed in an injection-molding tool allocated to the respective buffer container, or
b) Pressed into a single injection-molding tool by way of an additional control valve.

7. The method according to one of the preceding claims, **characterized in that** the average retention time of the plasticized plastic in the process should not exceed 60 seconds plus the cycle time, in particular not exceed 30 seconds plus the cycle time, and/or the average retention of the plasticized plastic in the processing unit of the plasticizing extruder should not exceed 15 seconds, in particular not exceed 10 seconds.

8. The method according to one of the preceding claims, **characterized in that** the plasticized plastic is pressed into a plurality of cavities of an injection-molding tool to manufacture a plurality of hollow items, in particular performs for food packages like beverage bottles out of a thermoplastic such as a polyester.

9. A device for manufacturing injection-molded articles out of thermoplastics, which exhibits at least one multi-screw extruder as the plasticizing extruder (11; 31) and at least one injection-molding tool (21; 44, 46), **characterized in that** the plasticizing extruder is a continuously operating multi-screw extruder with at least three screw shanks (16ₙ₁-16ₙₓ; 36ₙ₁-36ₙₓ) that tightly intermesh at least in partial areas and are arranged on a ring line, and that the plasticizing extruder (11; 31) exhibits a throughput number Z exceeding 800, in particular exceeding 2750, wherein Z = Q/L^{^2.8}, with the throughput Q being calculated in [kg/h], and length L in [m].

10. The device according to claim 9, **characterized in that** the multi-screw extruder (11; 31) is a ring extruder with closed, annularly arranged screw shanks.

11. The device according to claim 9 or 10, **characterized in that** the plasticizing extruder (11; 31) exhibits at least one drive (12), a reduction gear (13), distributor gear (14) and a processing unit (15), wherein the processing unit exhibits one or more of the following components:
a) One or more material inlet openings;
b) One or more metering devices connected with a material inlet opening;
c) One or more outlet openings;
d) One or more vacuum stations connected with an outlet opening;
and a melt path is arranged between the plasticizing extruder (11; 31) and the at least one injection-molding tool (21; 44, 46), wherein the melt path can exhibit one or more of the following components:
e) A melt pump;
f) One or more measuring devices to determine rheological data;
g) One or more melt filters;
h) One or more buffer containers;
i) One or more control valves.

12. The device according to one of claims 9 to 11, **characterized in that** the melt path exhibits at least one control valve (39ₙ₁) and at least two buffer containers (40, 42), wherein the control valve establishes a respective connection between the plasticizing extruder (31) and a buffer container (40, 42), and either:
a) Connects a respective buffer container with an allocated injection-molding tool (44, 46), or
b) Connects at least the two buffer containers with a single injection-molding tool via another control valve.

13. The device according to one of claims 9 to 12, **characterized in that** the screw shanks ((16ₙ₁-16ₙₓ; 36ₙ₁-36ₙₓ) can axially shift, thereby creating a buffer area in the processing unit given an axial shift toward the back, as a result of which:
a) The screw shanks axially shift relative to the distributor gear (14); or
b) The screw shanks along with the distributor gear (14) axially shift relative to the reduction gear (13);
c) The screw shanks along with the distributor gear (14) and reduction gear (13) axially shift relative to the drive (12);
d) The screw shanks along with the distributor gear (14), reduction gear (13) and drive (12) axially shift; or
e) The casing of the processing unit axially shifts relative to the screw shanks; or
f) The core inside the screw shank ring of a ring extruder can be axially shifted relative to the screw shanks.

14. The device according to one of claims 9 to 13, **characterized in that** the injection-molding tool (21; 44, 46) exhibits several cavities (22ₙ₁-22ₙₓ; 45ₙ₁-45ₙₓ, 47ₙ₁-47ₙₓ) to manufacture performs for food packages, in particular beverage bottles.

## Revendications

1. Procédé de fabrication de produits moulés par injection en matières thermoplastiques, lequel comporte :
a) une étape pour ramollir la matière plastique au moyen d'une extrudeuse multi-arbres,
b) une étape pour le moulage par pression de la matière plastique ramollie dans au moins un moule,
**caractérisé en ce que** la matière plastique est ramollie dans une extrudeuse multi-arbres fonctionnant en continu avec au moins trois arbres hélicoïdaux à engrenage serré dans au moins des zones partielles, disposés sur une ligne en couronne, notamment une extrudeuse annulaire avec au moins six arbres hélicoïdaux, à engrenage serré dans au moins des zones partielles, disposés en forme de couronne, et **en ce que** l'extrudeuse de plastification (11 ; 31) présente un indice de débit Z supérieur à 800, notamment supérieur à 2750, alors que Z = Q/L^{^2.8} est calculé avec le débit Q en [kg/h] et la longueur L en [m].

2. Procédé selon la revendication 1, **caractérisé en ce que** la matière thermoplastique est un polycondensat, notamment un polyester.

3. Procédé selon l'une quelconque des revendications précédentes, **caractérisé en ce qu'**on sèche le polycondensat avant la plastification.

4. Procédé selon l'une quelconque des revendications précédentes, **caractérisé en ce que** la quantité de matière plastique ramollie est supérieure à 800kg/h, notamment supérieure à 1000kg/h.

5. Procédé selon l'une quelconque des revendications précédentes, **caractérisé en ce que** la matière plastique ramollie traverse l'une ou plusieurs des étapes suivantes :
a) dégazage
b) mélange à des additifs,
c) filtrage,
d) montée en pression au moyen d'une pompe à masse fondue,
e) détermination des propriétés rhéologiques,
f) accumulation dans au moins un réservoir d'accumulation, ce qui permet de procéder au ramollissement en continu et en discontinu au moulage par pression dans un moule.

6. Procédé selon l'une quelconque des revendications précédentes, **caractérisé en ce que** la matière plastique ramollie est alimentée en alternance vers l'un parmi au moins deux réservoirs d'accumulation, notamment via une soupape de commande et soit
a) est moulée par pression dans un outil de moulage par injection, qui est associé au réservoir d'accumulation concerné,
b) est moulée par pression via une autre soupape de commande dans un seul outil de moulage par injection.

7. Procédé selon l'une quelconque des revendications précédentes, **caractérisé en ce que** le temps de séjour moyen de la matière plastique ramollie dans le processus ne doit pas excéder 80 secondes plus le temps de cycle, notamment 30 secondes plus le temps de cycle et/ou **en ce que** le temps de séjour moyen de la matière plastique ramollie dans la partie de procédé de l'extrudeuse de plastification ne doit pas excéder 15 secondes, notamment ne doit pas excéder 10 secondes.

8. Procédé selon l'une quelconque des revendications précédentes, **caractérisé en ce que** pour la fabrication d'une pluralité de corps creux, notamment de pré-ébauches d'emballages alimentaires comme des bouteilles pour boissons dans une matière thermoplastique, comme par exemple un polyester, la matière plastique ramollie est moulée par pression dans une pluralité de cavités d'un outil de moulage par injection.

9. Installation pour la fabrication de produits de moulage par injection en matière thermoplastique, laquelle comporte au moins une extrudeuse multi-arbres en tant qu'extrudeuse de plastification (11 ; 31) et au moins un outil de moulage par injection (21 ; 44, 46), **caractérisée en ce que** l'extrudeuse de plastification est une extrudeuse multi-arbres fonctionnant en continu, avec au moins trois arbres hélicoïdaux (16ₙ₁-16ₙₓ ; 36ₙ₁-36ₙₓ) disposés sur une ligne en couronne, à engrenage serré dans au moins des zones partielles, et **en ce que** l'extrudeuse de plastification (11 ; 31) comporte un indice de débit Z supérieur à 800, notamment supérieur à 2750,
Z = Q / L^{^2.8} , étant calculé avec le débit Q en [kg/h] et la longueur L en [m].

10. Installation selon la revendication 9,
**caractérisée en ce que** l'extrudeuse multi-arbres (11 ; 31) est une extrudeuse annulaire avec des arbres hélicoïdaux disposés en forme de couronne fermée.

11. Installation selon la revendication 9 ou 10,
**caractérisée en ce que** l'extrudeuse de plastification (11 ; 31) comporte au moins un entraînement (12), un engrenage démultiplicateur (13), une boîte de transfert (14) et une partie de procédé (15), la partie de procédé comportant un ou plusieurs des composants suivants :
a) un ou plusieurs orifices d'alimentation de matière,
b) un ou plusieurs dispositifs de dosage qui sont reliés à un orifice d'alimentation de matière,
c) un ou plusieurs orifices de sortie,
b) un ou plusieurs postes de dépression, qui sont reliés avec un orifice de sortie.
et **en ce qu'**un trajet de masse en fusion est disposé entre l'extrudeuse de plastification (11 ; 31) et l'au moins un outil de moulage par injection (21 ; 44, 46), le trajet de masse en fusion pouvant comporter un ou plusieurs des composants suivants :
e) une pompe de masse en fusion,
f) un ou plusieurs dispositifs de mesure pour déterminer des données rhéologiques,
g) un ou plusieurs filtres de masse en fusion,
h) un ou plusieurs réservoirs d'accumulation,
i) une ou plusieurs soupapes de commande.

12. Installation selon l'une quelconque des revendications 9 à 11, **caractérisée en ce que** le trajet de masse en fusion comporte au moins une soupape de commande (39ₙ₁) et au moins deux réservoirs d'accumulation (40, 42), la soupape de commande établissant chaque fois une liaison entre l'extrudeuse de plastification (31) et un réservoir d'accumulation (40, 42), et soit
a) chaque fois un réservoir d'accumulation est relié à un outil de moulage par injection (44, 46) associé ou
b) les aux moins deux réservoirs d'accumulation sont reliés par l'intermédiaire d'une soupape de commande supplémentaire à un seul outil de moulage par injection.

13. Installation selon l'une quelconque des revendications 9 à 12, **caractérisé en ce que** les arbres hélicoïdaux (16ₙ₁16ₙₓ ; 36ₙ₁-36ₙₓ) sont logés en étant susceptibles de translation axiale, une translation axiale vers l'arrière donnant naissance à un espace d'accumulation dans la partie de procédé, alors que soit
a) les arbres hélicoïdaux se déplacent en translation axiale par rapport à la boîte de transfert (14) ; ou
b) les arbres hélicoïdaux se déplacent en translation axiale, ensemble avec la boîte de transfert (14), par rapport à l'engrenage démultiplicateur (13) ; ou
b) les arbres hélicoïdaux se déplacent en translation axiale, ensemble avec la boîte de transfert (14) et l'engrenage démultiplicateur (13), par rapport à l'entraînement (12) ; ou
b) les arbres hélicoïdaux se déplacent en translation axiale, ensemble avec la boîte de transfert (14), l'engrenage démultiplicateur (13) et l'entraînement (12) ; ou
e) le carter de la partie de procédé se déplace en translation axiale par rapport aux arbres hélicoïdaux ; ou
f) le noyau à l'intérieur de la couronne d'arbres hélicoïdaux d'une extrudeuse annulaire est susceptible de se déplacer en translation par rapport aux arbres hélicoïdaux.

14. Installation selon l'une quelconque des revendications 9 à 13, **caractérisée en ce que** l'outil de moulage par injection (21 ; 55, 46) comporte plusieurs cavités (22ₙ₁-22ₙₓ ; 45ₙ₁-45ₙₓ, 47ₙ₁-47ₙₓ) pour la fabrication de pré-ébauches d'emballages alimentaires, notamment de bouteilles pour boissons.
